# FASCICULE DE BREVET EUROPEEN

(11) **EP 3 419 482 B1**
(45) Date de publication et mention de la délivrance du brevet: **31.08.2022**
(21) Numéro de dépôt: 17705910.2
(22) Date de dépôt: 21.02.2017
(51) Int. Cl.: A47J 31/40, A47J 31/41, A47J 43/27, B65D 85/72

(54) **APPAREIL DE FABRICATION D'UNE BOISSON**
VORRICHTUNG ZUR HERSTELLUNG EINES GETRÄNKS
APPARATUS FOR MAKING A DRINK

(30) Priorité: 25.02.2016 FR 1651556
(43) Date de publication de la demande: 02.01.2019
(73) Titulaire: Kuantom, 75005 Paris (FR)
(72) Inventeur: LECOMTE, Valentin, 91540 Mennecy (FR); MARTINS, Geoffrey, 95240 Cormeilles-en-Parisis (FR)
(74) Mandataire: Nony
(86) Numéro de dépôt international: PCT/EP2017/053955
(87) Numéro de publication internationale: WO 2017/144477

(56) Documents cités:
- WO-A2-2007/120047
- US-A1- 2012 111 887
- US-A1- 2013 129 870

## Description

### Domaine technique

L'invention concerne un appareil de fabrication de boissons à l'unité, et en particulier de fabrication de cocktails.

### Etat de la technique

Des appareils de fabrication de cocktails sont disponibles sur le marché. Ils permettent de mélanger des ingrédients contenus dans différents conteneurs amovibles afin de créer un cocktail.

Un appareil de fabrication de boissons est connu de US 2013/129870. Deux liquides sont mélangés, mais ne sont pas injectés des conteneurs individuels directement dans une enceinte de mélange.

Les conditions d'hygiène doivent cependant être irréprochables, ce qui nécessite un nettoyage fréquent des pièces en contact avec les ingrédients. Ce nettoyage est généralement fastidieux ou nécessite un conteneur d'eau supplémentaire.

Par ailleurs, les ingrédients dépérissent rapidement après ouverture des conteneurs correspondants. Il est donc nécessaire de changer régulièrement ces conteneurs.

En outre, le temps de préparation d'une boisson est généralement relativement long.

Enfin, chaque changement d'ingrédient nécessite une reconfiguration de l'appareil.

Il existe donc un besoin pour un nouvel appareil de fabrication d'une boisson à l'unité, et en particulier d'un cocktail, permettant de résoudre, au moins partiellement, les problèmes susmentionnés.

Un but de l'invention est de répondre à ce besoin.

### Résumé de l'invention

L'invention propose un appareil de fabrication d'une boisson à l'unité, comprenant :
- une source de pression ;
- un cellier définissant une pluralité de logements;
- une pluralité de conteneurs amovibles, immobilisés chacun, dans une position de service, dans un logement respectif, chaque conteneur comportant
   - un récipient contenant un ingrédient et
   - un clapet de vidage amont autorisant une sortie dudit ingrédient vers l'extérieur du récipient sous l'effet d'une surpression générée à l'intérieur dudit récipient par ladite source de pression ;
- une enceinte de réception des ingrédients extraits desdits conteneurs, *via* lesdits clapets de vidage amont, sous l'effet de ladite surpression, de manière à fabriquer ladite boisson ;
- un module de commande apte à commander desdites surpressions dans desdits conteurs en fonction d'une composition souhaitée pour ladite boisson.

Comme on le verra plus en détail dans la suite de la description, un appareil selon l'invention déplace les ingrédients par surpression, ce qui permet de limiter le nombre de pièces en contact avec les ingrédients. La mise en œuvre de surpressions permet également un nettoyage rapide et efficace.

Enfin, le clapet de vidage amont se ferme en l'absence de surpression dans le conteneur correspondant, ce qui permet de limiter le contact entre l'ingrédient à l'intérieur du conteneur et l'environnement extérieur. Cet ingrédient est avantageusement mieux conservé.

Un appareil selon l'invention peut encore comporter une ou plusieurs des caractéristiques optionnelles suivantes :
- chaque conteneur comporte une tête fixée sur ledit récipient, ladite tête comportant un clapet de pressurisation autorisant une entrée de fluide en provenance de ladite source de pression, de préférence d'air, à l'intérieur de récipient ;
- la tête est amovible, et de préférence vissée sur ledit conteneur ;
- le clapet de pressurisation présente une pression d'ouverture comprise entre 100 mbar et 1 bar, et/ou le clapet de vidage amont présente une pression d'ouverture comprise entre 100 mbar et 1 bar ;
- dans un mode de réalisation, chaque logement comporte un clapet de vidage aval autorisant une sortie dudit ingrédient sous l'effet d'une surpression générée à l'intérieur dudit récipient par ladite source de pression, le clapet de vidage aval étant disposé en aval du clapet de vidage amont, en considérant le sens d'écoulement de l'ingrédient sortant du récipient ;
- le clapet de vidage aval présente une pression d'ouverture inférieure à celle du clapet de vidage amont ;
- le volume intermédiaire entre les clapets de vidage amont et aval est inférieur à 5 cm³ ;
- dans un mode de réalisation, l'appareil comporte un bouchon mobile entre une position dégagée et une position d'obturation dans laquelle il autorise ou interdit, respectivement, un écoulement par gravité de l'ingrédient depuis ledit récipient vers ladite enceinte ;
- le bouchon est conformé pour n'autoriser la mise en place d'un conteneur dans ledit logement que lorsqu'il est dans la position dégagée ;
- dans la position dégagée du bouchon, chaque clapet de vidage amont débouche directement au-dessus de ladite enceinte, de manière qu'un ingrédient sortant dudit clapet de vidage aval tombe directement dans ladite enceinte ;
- de préférence, un ingrédient sortant d'un conteneur parcourt une distance inférieure à 10 cm, de préférence inférieure à 5 cm, de préférence inférieure à 2 cm avant de tomber en chute libre dans ladite enceinte ;
- de préférence, un ingrédient sortant d'un conteneur ne transite par aucune conduite avant de tomber dans ladite enceinte ;
- l'enceinte comporte un orifice de remplissage, de préférence un unique orifice de remplissage, sélectivement obturable, c'est-à-dire dont l'ouverture et la fermeture sont commandées, de préférence par le module de commande, ledit orifice de remplissage débouchant au-dessus d'un emplacement de réception d'un verre ;
- l'orifice de remplissage est obturable électriquement ou sous l'effet d'une surpression ;
- l'appareil comporte des moyens pour maintenir ledit bouchon dans la position d'obturation lorsque le logement n'est pas occupé par un conteneur ;
- l'appareil comporte des moyens magnétiques pour maintenir le bouchon dans la position d'obturation en l'absence de conteneur dans ledit logement ;
- l'appareil comporte un circuit de dépressurisation de l'enceinte, ledit circuit de dépressurisation comportant une ligne de dépressurisation mettant en communication de fluide l'enceinte avec un puits de pression, une valve de dépressurisation, commandée par le module de commande, étant insérée dans ladite ligne de dépressurisation ;
- l'appareil comporte un compresseur dont une entrée constitue un dit puits de pression et une sortie constitue une dite source de pression ;
- chaque récipient comporte une paroi d'une épaisseur supérieure à 1 mm, de préférence supérieure à 1,5 mm, et/ou présente un volume intérieur inférieur à 1 L, de préférence inférieur à 0,5 L ;
- l'appareil comporte, pour chaque logement, des moyens d'accouplement magnétiques entre ledit logement et un conteneur disposé dans ledit logement ;
- l'appareil comporte un module de refroidissement des ingrédients dans ladite enceinte ;
- l'appareil comporte un détecteur apte à détecter une présence d'une personne à moins de 15 m de l'appareil, le module de commande étant programmé pour commander desdites surpressions dans desdits conteneurs en fonction d'une composition souhaitée pour ladite boisson et pour activer le module de refroidissement en conséquence d'une détection par ledit détecteur ;
- le détecteur est apte à détecter un signal émis par un appareil électronique, en particulier pour établir ou maintenir une connexion informatique, notamment par Wifi ou Bluetooth, en particulier une connexion d'une télécommande dudit appareil ou d'un téléphone portable ;
- le module de refroidissement comporte un module Peltier ;
- l'enceinte définit un bol de réception des ingrédients sortant des conteneurs, de préférence amovible, et, de préférence, le module de refroidissement présente une surface de forme sensiblement complémentaire à la forme dudit bol ;
- le module de refroidissement est en contact avec le bol sur plus de 50% de la surface extérieure du bol ;
- le module de refroidissement est en contact avec le bol sur plus de 80% de la surface extérieure du bol ;
- le module de refroidissement comporte une capsule, de préférence amovible, contenant un fluide sous pression, de préférence de l'azote ou du CO₂, de préférence sous forme liquide, et une valve de refroidissement, commandée par le module de commande, de manière à sélectivement autoriser ou interdire un échappement dudit fluide hors de la capsule ;
- de préférence, l'appareil comporte une conduite de guidage du fluide s'échappant de la capsule jusqu'à l'intérieur de ladite enceinte, une conduite étant constituée par tout moyen permettant de guider le fluide, et en particulier par un ou plusieurs tubes, rigides ou souples, ou par une ou plusieurs lumières ménagées à travers des pièces de l'appareil ;
- de préférence, ladite conduite débouche par une ouverture disposée à moins de 50 mm, de préférence à moins de 40 mm, de préférence à moins de 30 mm, de préférence à moins de 20 mm, de préférence à moins de 10 mm du fond de ladite enceinte ;
- de préférence, l'appareil comporte une valve de remplissage, de préférence commandée par le module de commande, mettant sélectivement en communication de fluide l'intérieur et l'extérieur de ladite enceinte ;
- de préférence, ladite conduite est au moins en partie ménagée dans un obturateur de la valve de remplissage ;
- l'appareil comporte des moyens pour mélanger les ingrédients dans l'enceinte, le module de commande étant programmé pour activer lesdits moyens en fonction de l'activation du module de refroidissement ;
- l'appareil comporte une télécommande, de préférence un appareil téléphonique muni d'un applicatif spécialisé, adapté pour configurer le module de commande et/ou pour transmettre une recette au module de commande ;
- chaque conteneur est pourvu d'un marqueur, de préférence un marqueur NFC, l'appareil comportant un lecteur apte à lire et/ou écrire dans ledit marqueur, de préférence à distance, des informations relatives à l'utilisation dudit conteneur, et en particulier relatives au niveau de remplissage et/ou à la fréquence d'utilisation et/ou aux dates d'utilisation, l'appareil comportant également, de préférence, une interface permettant d'afficher une ou plusieurs desdites informations ;
- ledit marqueur est fixé sur le récipient dudit conteneur.

### Définitions

La position "de service" est une position dans laquelle les conteneurs sont disposés dans leurs logements respectifs.

Dans la présente description, on distingue un "clapet", dont l'obturateur, classiquement une membrane souple, par exemple en silicone, s'ouvre sous l'effet d'une pression différentielle supérieure à une pression d'ouverture et se referme de lui-même lorsque la pression différentielle est inférieure à la pression d'ouverture, et une "valve", dont l'ouverture et la fermeture sont commandées par le module de commande. Un "clapet" est parfois encore appelé "valve anti-retour". Sauf indication contraire, les clapets d'un appareil selon l'invention sont de préférence de type « à incision transversale » (« cross-slit » en anglais).

Les positions "amont" et "aval" sont définies par rapport à l'écoulement de l'ingrédient.

Un « coupleur » est un organe d'un logement autorisant une connexion fluidique entre l'intérieur d'un conteneur logé dans ce logement et l'enceinte.

### Brève description des figures

D'autres caractéristiques et avantages de l'invention apparaîtront encore à la lecture de la description détaillée qui va suivre, et à l'examen du dessin annexé, dans lequel:
- la figure 1 représente, schématiquement, un appareil selon l'invention ;
- la figure 2 représente un détail d'un appareil selon un mode de réalisation préféré de l'invention, en coupe ;

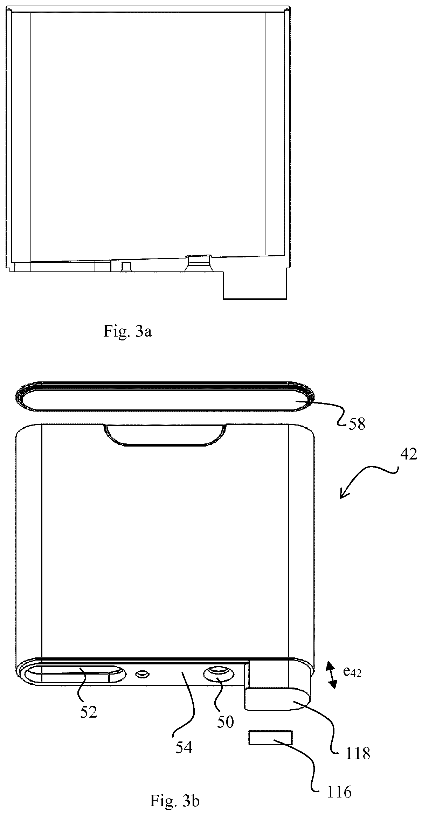

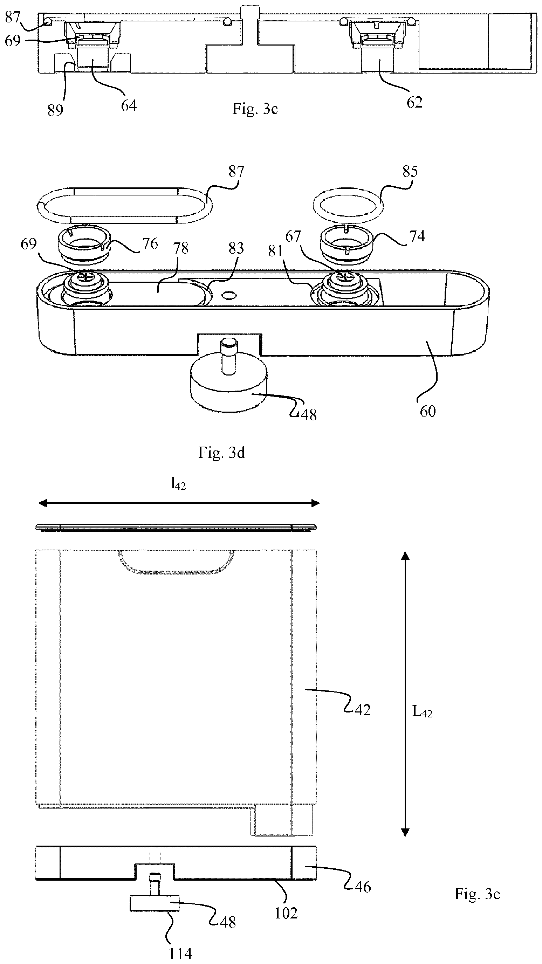

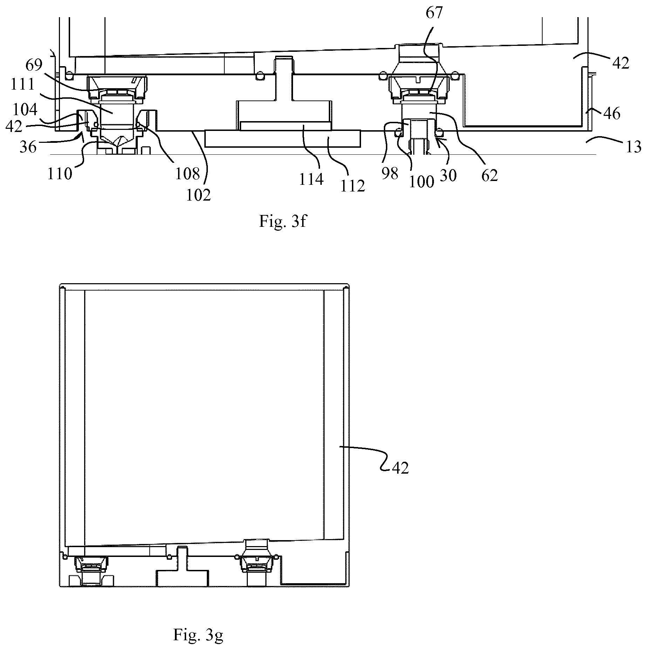

- la figure 3 représente un exemple de conteneur pouvant être mis en œuvre dans l'appareil selon l'invention de la figure 2, et en particulier
   - le récipient du conteneur en coupe longitudinale médiane (figure 3a) ;
   - le récipient du conteneur en vue en vue éclatée (figure 3b) ;
   - la tête du conteneur en coupe longitudinale médiane (figure 3c) ;
   - la tête du conteneur en vue éclatée (figure 3d) ;
   - le conteneur, en vue de face et éclatée (figure 3e) ;
   - un détail du conteneur en coupe longitudinale médiane, le conteneur étant assemblé au cellier (figure 3f) ;
   - le conteneur en coupe longitudinale médiane (figure 3g) ;

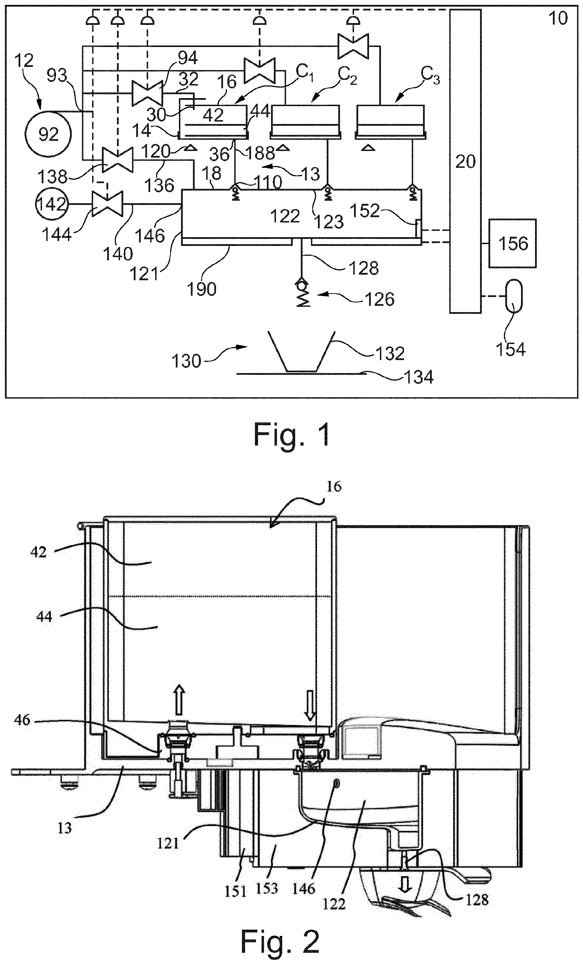

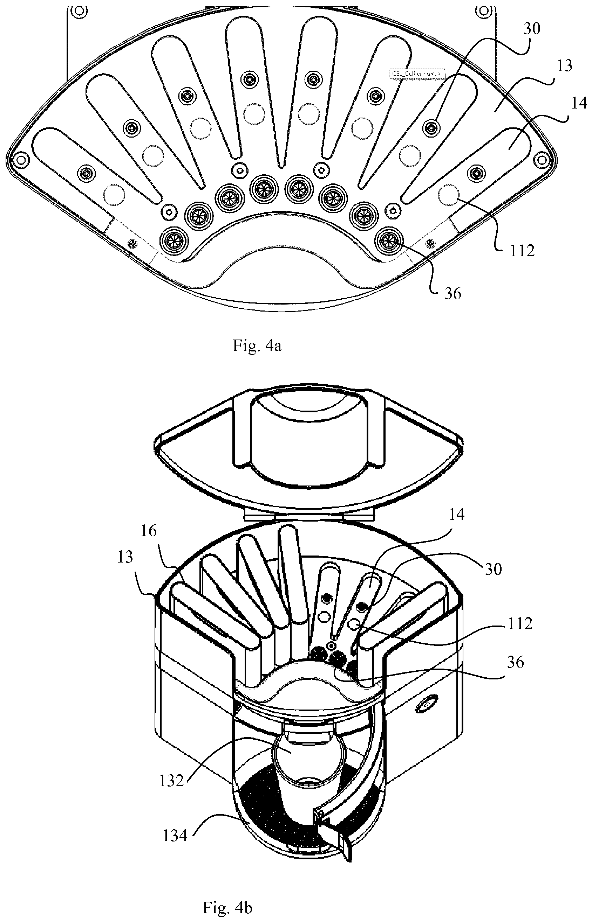

- les figures 4a et 4b représentent le cellier de l'appareil de la figure 2 en vue de dessus et en perspective respectivement ;

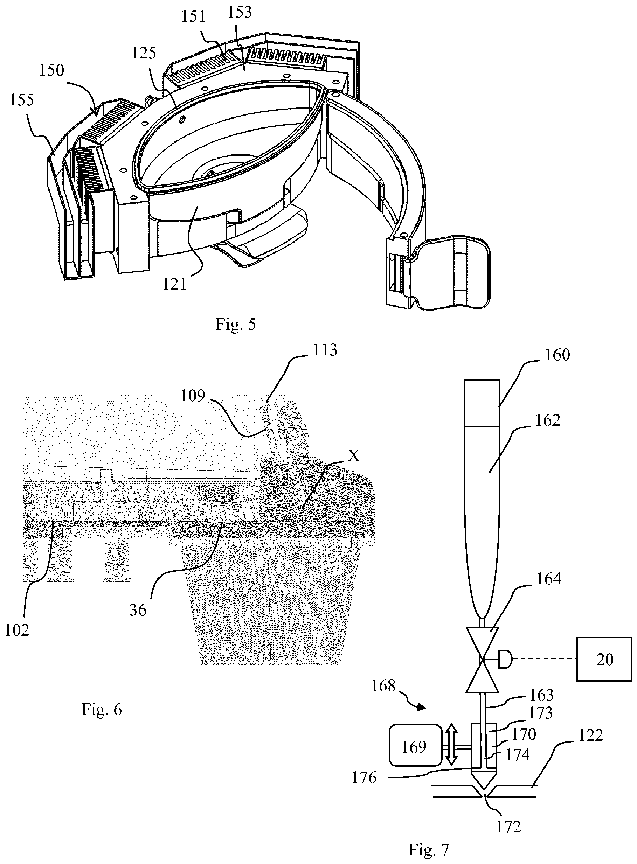

- la figure 5 représente l'entonnoir et le module de refroidissement de l'appareil de la figure 2 ;
- la figure 6 représente un détail d'un appareil selon un mode de réalisation préféré de l'invention, en coupe ;
- la figure 7 représente schématiquement le principe de fonctionnement d'une valve de remplissage apte à assurer un convoyage d'un fluide de refroidissement.

Les différentes pièces d'un appareil selon l'invention sont décrites en référence à une position de service dans laquelle l'appareil est disposé sur un sol horizontal et prêt à fabriquer une boisson. Les adjectifs "supérieur" et "inférieur" font référence à cette position.

### Description détaillée

### Généralités

La figure 1 représente un appareil 10 de fabrication d'une boisson à l'unité, c'est-à-dire au verre, selon l'invention.

L'appareil 10 comporte une source de pression 12, un cellier 13 présentant une pluralité de logements 14, une pluralité de conteneurs 16, ou « pods », chaque conteneur 16 étant disposé dans un logement 14 correspondant, un entonnoir 18 permettant un mélange des différents ingrédients de la boisson, et un module de commande 20.

Le circuit permettant le remplissage de l'entonnoir avec un ingrédient contenu initialement dans un conteneur est similaire quel que soit le conteneur considéré. Sur la figure 1, de manière non limitative, trois circuits Ci, C₂ et C₃ ont été représentés. Dans la suite de la description, un seul de ces circuits (Ci) est donc décrit. A cet effet, des références génériques, sans indice, sont utilisées.

### Cellier

Chaque logement 14 est de préférence de forme sensiblement complémentaire à la partie inférieure d'un conteneur, de manière à pouvoir recevoir et immobiliser en position ledit conteneur.

De préférence, l'appareil comporte plus de trois, plus de quatre, plus de cinq, plus de six, plus de sept, et/ou moins de vingt, moins de quinze, voire moins de dix logements, de préférence moins de huit logements, de préférence six logements.

De préférence, tous les logements 14 sont adjacents les uns aux autres. De préférence, la plus petite distance entre deux logements adjacents est inférieure à 5 cm, de préférence inférieure à 3 cm. La compacité de l'appareil en est améliorée.

Chaque logement 14 comporte un coupleur de pressurisation 30 connectée à une ligne de pressurisation 32 et permettant d'augmenter la pression à l'intérieur du conteneur 16 correspondant.

Les conteneurs et les coupleurs de pressurisation sont configurés pour autoriser plusieurs déconnexions et reconnexions d'un même conteneur à un même coupleur de pressurisation sans dégradation du conteneur. L'utilisateur peut ainsi facilement remplacer un ingrédient par un autre.

Chaque logement 14 comporte également un coupleur de vidage 36 par lequel l'ingrédient peut être extrait du conteneur 16.

Les logements dans lesquels sont introduits les conteneurs présentent de préférence une forme allongée. De préférence, le coupleur de vidage 36 d'un logement est disposé à une extrémité dudit logement. De préférence encore, tous les coupleurs de vidage des différents logements sont disposés à proximité les uns des autres. De préférence, la distance maximale entre deux coupleurs de vidage adjacents est inférieure à 5 cm, de préférence inférieure à 3 cm.

### Conteneurs

Les conteneurs 16 sont amovibles, c'est-à-dire qu'ils peuvent être extraits des logements, puis replacés dans les logements, dans la position de service, aussi souvent que souhaité.

Tous les conteneurs sont de préférence identiques. Ils peuvent contenir des ingrédients identiques ou différents. De préférence, au moins deux conteneurs contiennent des ingrédients différents.

Un conteneur 16 comporte un récipient 42 définissant un volume dans lequel est disposé un ingrédient 44, et une tête 46, fixée sur le récipient 42.

Un récipient 42 présente de préférence un volume intérieur supérieur à 0,1 litre, de préférence supérieur à 0,2 litre, et/ou inférieur à 1,5 litre, de préférence inférieur à 1 litre, de préférence inférieur à 0,5 litre. Il présente de préférence une forme générale sensiblement parallélépipédique plate, comme représenté sur la figure 2a. La longueur L₄₂ d'un récipient 42 est de préférence supérieure à 80 mm et/ou inférieure à 150 mm, de préférence inférieure à 130 mm. L'épaisseur e₄₂ d'un récipient 42 est de préférence supérieure à 10 mm et/ou inférieure à 30 mm. La largeur l₄₂ d'un récipient 42 est de préférence supérieure à 100 mm, de préférence supérieure à 110 mm et/ou inférieure à 150 mm, de préférence inférieure à 130 mm.

La paroi d'un récipient 42 peut être en tout matériau "alimentaire" adapté à l'ingrédient 44 contenu dans le récipient. Le conteneur peut être à usage unique, c'est-à-dire non rechargeable, ou réutilisable. De préférence, le matériau de la paroi du récipient 42 est en plastique lorsque le conteneur est réutilisable. De préférence, lorsque le conteneur est à usage unique, ledit matériau est en plastique ou comporte, voire est constitué d'une matière fibreuse, de préférence cellulosique, comme du papier ou du carton. L'épaisseur de la paroi est de préférence supérieure à 1 mm, de préférence supérieure à 1,5 mm, de manière que le récipient soit rigide. De préférence, la rigidité est telle qu'il n'est pas possible de faire sortir l'ingrédient 44 par une simple pression manuelle sur le récipient 42.

Le récipient 42 définit un volume fermé, qui constitue "l'intérieur" du conteneur. Le récipient 42 ne débouche vers l'extérieur que par un orifice de pressurisation 50 et un orifice de vidage 52 qui, dans la position de service, sont sélectivement en communication de fluide avec les coupleurs de pressurisation 30 et de vidage 36 du logement correspondant, respectivement.

Lorsque le récipient 42 est à usage unique, les orifices de pressurisation 50 et de vidage 52 sont, avant utilisation du récipient, de préférence provisoirement obturés au moyen d'un opercule amovible, retiré avant que le récipient 42 ne soit accouplé à la tête 46. De préférence, les orifices de pressurisation et de vidage débouchent sur la face inférieure 54 du récipient 42.

Dans un mode de réalisation, le récipient 42 est pourvu d'un couvercle 58. De préférence, le couvercle 58 est amovible, ce qui permet le remplissage du récipient.

La tête 46 est fixée sur la partie inférieure du récipient 42.

Dans un mode de réalisation, la tête 46 est fixée sur le récipient 42 de manière amovible, par exemple par un système de vis 48 ou de clips. Avantageusement, la tête 46 peut être utilisée pour plusieurs récipients 42, ce qui est particulièrement utile lorsque le récipient 42 est à usage unique.

La tête 46 comporte un carter 60, de préférence en un plastique rigide, définissant un conduit de pressurisation 62 et un conduit de vidage 64, obturés par des clapets de pressurisation 67 et de vidage amont 69, respectivement, fixés sur le carter 60, par exemple, au moyen de brides de pressurisation 74 et de vidage 76, respectivement.

Les clapets peuvent être fixés par tout moyen, par exemple par collage ou clipsage sur le carter 60.

Les conduits de pressurisation et de vidage débouchent, du côté amont, c'est-à-dire du côté du conteneur, sur une face supérieure 78 pourvue de gorges 81 et 83. Des joints d'étanchéité 85 et 87 sont insérés dans les gorges 81 et 83, respectivement, et dans la position assemblée de la tête 46 sur le récipient 42, viennent prendre appui, de manière étanche, sur la face inférieure 54 du récipient 42. De préférence, le simple vissage de la tête 46 sur le récipient 42 suffit à comprimer les joints d'étanchéité 85 et 87 et à assurer l'étanchéité.

Le conduit de vidage 64 du carter 60 se termine, en partie inférieure, sous la forme d'une tétine 89.

Avantageusement, la conception d'une tête 46 indépendante du récipient 42 permet de fabriquer de conteneurs 16 à coût réduit, et d'utiliser des récipients 42 à usage unique.

### Circuit de pressurisation d'un conteneur

La source de pression 12 est notamment destinée à mettre en surpression l'intérieur des conteneurs 16 pour en extraire de l'ingrédient pour le verser dans l'entonnoir.

La source de pression 12 comporte de préférence un compresseur 92, de préférence un compresseur à air, dont une sortie 93 est connectée à des circuits de pressurisation des conteneurs 16 et de l'entonnoir 18.

Le circuit de pressurisation d'un conteneur comporte une ligne de pressurisation 32 mettant en communication de fluide la sortie 93 du compresseur 92 et l'intérieur du conteneur. Une valve de pressurisation 94 est insérée dans chaque ligne de pressurisation 32 d'un conteneur.

Le coupleur de pressurisation 30 présente une buse de pressurisation 98, de forme sensiblement complémentaire au conduit de pressurisation 62 de la tête du conteneur et qui, dans la position de service, pénètre à l'intérieur du conduit de pressurisation 62. La buse de pressurisation 98 est ceinturée d'une gorge recevant un joint d'étanchéité 100, de sorte que, dans la position de service, la face inférieure 102 de la tête 46 puisse s'appuyer, de manière étanche, sur le joint d'étanchéité 100.

Le clapet de pressurisation 67 de la tête du conteneur est orienté de manière à s'ouvrir sous l'effet d'une surpression relative à l'extérieur du récipient. Cette surpression, ou pression d'ouverture ΔP₆₇, est de préférence comprise entre 100 mbar et 1 bar.

L'air comprimé circulant dans la ligne de pressurisation 32 peut ainsi circuler, sans fuite, jusqu'au clapet de pressurisation 67 et l'ouvrir lorsque la pression à l'intérieur du récipient 42 est significativement inférieure à la pression de l'air comprimé.

Dans un mode de réalisation préféré, le clapet de pressurisation est un clapet mécanique comportant un obturateur poussé contre son siège par un moyen élastique, de préférence un ressort.

### Circuit de vidage d'un conteneur

Le coupleur de vidage 36 présente une buse de vidage 104, sous la forme d'un manchon, dans laquelle peut être introduite la tétine 89 définie par le carter 60. Extérieurement, la tétine 89 présente une forme sensiblement complémentaire à la forme intérieure de la buse de vidage 104. Une gorge est ménagée à l'intérieur de la buse de vidage 104 et reçoit un joint d'étanchéité 108. La buse de vidage et la tétine sont conformées de manière que, lorsque la tétine est introduite dans la buse de vidage, elle comprime le joint d'étanchéité 108, de manière à assurer un contact étanche.

Le coupleur de vidage 36 du logement est pourvu d'un clapet de vidage aval 110. Les clapets de vidage amont 69 et aval 110 sont orientés pour s'ouvrir sous l'effet d'une surpression relative à l'intérieur du récipient 42. Les pressions d'ouverture ΔP₆₉ et ΔP₁₁₀ sont les différences de pressions permettant ces ouvertures et sont de préférence comprises entre 100 mbar et 1 bar. De préférence encore, la pression d'ouverture ΔP₁₁₀ est inférieure à la pression d'ouverture ΔP₆₉, le rapport ΔP₆₉/ ΔP₁₁₀ entre ces pressions d'ouverture étant de préférence supérieur à 1,05, de préférence supérieur à 1,10, de préférence supérieur à 1,15. Lorsque le clapet de vidage amont 69 s'ouvre, il en est donc immédiatement de même du clapet de vidage aval 110. En revanche, en cas de dépressurisation limitée en aval du clapet de vidage aval, le clapet de vidage aval 110 peut s'ouvrir sans que le clapet de vidage amont 69 s'ouvre. Il est ainsi possible d'évacuer un résidu d'ingrédient contenu dans le volume intermédiaire 111 entre les deux clapets de vidage amont 69 et aval 110.

Le volume intermédiaire 112 est de préférence inférieur à 10 cm³, de préférence inférieur à 5 cm³, de préférence inférieur à 3 cm³, de préférence inférieur à 2 cm³.

En l'absence d'un conteneur sur un logement, le clapet de vidage aval 110 correspondant reste fermé. Avantageusement, l'absence d'un conteneur ne modifie donc pas le fonctionnement de l'appareil 10. En outre, l'enceinte de l'entonnoir, décrite ci-après, reste isolée de l'environnement extérieur, ce qui améliore les conditions d'hygiène.

De préférence, la longueur du coupleur de vidage, mesurée suivant la direction d'écoulement de l'ingrédient, est inférieure à 5 cm, de préférence inférieure à 3 cm, de préférence inférieure à 2 cm. Avantageusement, l'ingrédient parcourt une distance réduite, de préférence inférieure à 5 cm, à 3 cm, à 2 cm avant de tomber, en chute libre, dans l'enceinte. Les conditions d'hygiène sont ainsi optimales.

Dans un mode de réalisation, le clapet de vidage aval 110 est remplacé par un bouchon 109 qui obture, de manière étanche, le coupleur de vidage 36 du logement en l'absence de conteneur dans ledit logement, dans une position d'obturation. Le bouchon 109 est conformé de manière à rester dans la position d'obturation quelle que soit la pression en aval, et notamment quand la pression dans l'enceinte est élevée pour remplir le verre, comme décrit ci-après.

Le maintien en position d'obturation peut résulter du poids du bouchon ou, de préférence, d'un verrouillage ou de l'application d'une force d'attraction magnétique.

Le bouchon 109 peut être dégagé du coupleur de vidage 36, de manière à ne plus entraver le passage de liquide à travers le clapet de vidage (position dégagée). Dans la position dégagée, il peut en particulier reposer sur le conteneur, comme représentée sur la figure 6.

De préférence, le bouchon est conformé pour que le positionnement d'un conteneur dans un logement ne soit possible qu'après dégagement du bouchon.

De préférence, le bouchon est solidaire du cellier, de préférence monté à rotation sur le cellier, autour d'un axe X, de préférence sensiblement horizontal, entre les positions d'obturation et dégagée.

De préférence, le bouchon présente la forme d'une palette sensiblement plate, comme représenté sur la figure 6.

De préférence encore, le bouchon est pourvu d'une poignée 113 facilitant sa manipulation par l'utilisateur.

### Accouplement du conteneur et d'un logement

Le conteneur 16 et le logement 14 correspondant comportent de préférence des moyens d'accouplement assurant l'étanchéité par les joints 100 et 108. L'accouplement peut être effectué par tout moyen. De préférence, l'accouplement est magnétique. Dans un mode de réalisation préféré, le logement 14 comporte un aimant 112 et le conteneur 16 comporte du métal, par exemple sous la forme d'un insert métallique 114, disposé de manière à être attiré par l'aimant 112 dans la position de service. L'attraction entre l'aimant 112 et l'insert métallique 114 permet avantageusement de plaquer le conteneur 16 dans le logement 14, en assurant ainsi une compression des joints 100 et 108. L'utilisation de moyens d'accouplement permet avantageusement de bien maîtriser la pression entre le conteneur 16 et le logement 14, et ainsi d'éviter toute déformation non contrôlée, notamment des membranes des clapets.

### Moyens de communication entre le conteneur et le cellier

Chaque conteneur 16 porte encore un marqueur 116, ou « tag », de préférence de type NFC, de préférence fixé sur la tête 46. Le marqueur 116 est de préférence fixé sur la face inférieure 54 du récipient 42 ou, sur la paroi inférieure de la tête 46, du côté opposé à la face inférieure de la tête 46. Avantageusement, le marqueur 116 est protégé.

Le marqueur 116 contient de préférence des informations sur l'ingrédient 44 contenu dans le conteneur, par exemple sur sa composition, son volume, sa masse volumique, son origine, le nombre de calories qu'il apporte ou sa date de péremption.

L'appareil 10 comporte encore un lecteur 120, disposé de manière à lire le marqueur 116. De préférence, la communication entre le marqueur 116 et le lecteur 120 est effectuée sans contact, de préférence par NFC (en anglais « near field communication »).

Dans un mode de réalisation, le récipient 42 comporte une excroissance 118, qui fait saillie depuis la face inférieure 54 du récipient 42. Le marqueur 116 est de préférence fixé sur cette excroissance, de manière que, dans la position assemblée, il s'étende à proximité de la face inférieure 102 de la tête 46. Les échanges d'informations entre le marqueur 116 et le lecteur 120 en sont facilités.

De préférence, le lecteur 120 est également capable d'écrire sur le marqueur 116. De préférence, il est capable d'écrire sur le marqueur 116 des informations relatives à l'utilisation du conteneur 16, par exemple relatives à la quantité d'ingrédient déjà extraite du conteneur, ou à la date de première utilisation du conteneur.

Le lecteur 120 est de préférence en communication avec le module de commande 20. Avantageusement, le module de commande 20 peut informer l'utilisateur de la nécessité de changer un conteneur ou de prévoir le remplacement prochain du conteneur, mais aussi de l'informer de la péremption de l'ingrédient contenu dans le conteneur.

L'enregistrement d'informations sur le marqueur 116 par le lecteur 120 permet également, avantageusement, de conserver une traçabilité de ces informations, même si le conteneur est extrait de son logement, par exemple pour être utilisé sur un autre appareil. Les risques sanitaires en sont considérablement réduits et la qualité de l'information fournie aux utilisateurs en est améliorée.

Enfin, le marqueur permet avantageusement au module de commande 20 de connaître le contenu et le logement occupé par le conteneur, sans que l'utilisateur de l'appareil ait besoin de le configurer à cet effet.

### Entonnoir et circuit de remplissage du verre

L'entonnoir 18 définit, avec le cellier 13, une enceinte 122 hermétique. L'enceinte 122 définit un bol 121 dans lequel les ingrédients sortant des orifices de vidage 36 des logements sont déversés, par surpression dans les récipients 42.

Dans un mode de réalisation préféré, le bol 121 est disposé immédiatement sous les coupleurs de vidage 36. De préférence, chaque coupleur de vidage 36 débouche, vers l'aval, directement dans l'entonnoir, de sorte qu'un ingrédient sortant par le clapet de vidage aval 110 tombe directement dans le bol 121, sans transiter par un conduit comme un tuyau souple ou rigide. Les conditions d'hygiène sont alors optimales.

De préférence encore, l'enceinte 122 est définie par le bol 121 et par le cellier 13, prenant appui sur le bol 121, à la manière d'un couvercle. De préférence, la face inférieure 123 du cellier comporte une gorge, dans laquelle est disposé un joint d'étanchéité. Cette gorge est agencée de manière que ce joint prenne appui, de manière étanche, sur le bord supérieur 125 du bol 121.

De préférence encore, le bol 121 est plaqué contre le cellier par des moyens magnétiques, la force d'attraction étant suffisante pour assurer une compression du joint.

De préférence, le bol 121 de l'entonnoir est amovible de manière à pouvoir être nettoyé.

L'entonnoir 18 comporte encore un orifice de remplissage sélectivement obturable, de préférence un clapet de remplissage 126, commandé par le module de commande 20. Le clapet de remplissage 126 est inséré dans une ligne de remplissage 128 débouchant au fond de l'enceinte 122 à une extrémité, et, à l'autre extrémité, au-dessus d'un emplacement 130 de réception d'un verre 132 à remplir. De préférence, l'appareil 10 comporte un support 134 définissant l'emplacement 130 sur lequel le verre 132 doit être posé. La ligne de remplissage 128 autorise un écoulement du mélange contenu dans l'enceinte 122, vers le verre 132, sous l'effet d'une surpression dans l'enceinte 122. De préférence, la ligne de remplissage 128 est d'une longueur sensiblement nulle, le clapet de remplissage 126 étant intégré dans le fond de l'enceinte 122.

### Circuit de pressurisation de l'entonnoir

Le circuit de pressurisation de l'enceinte de l'entonnoir comporte une ligne de pressurisation 136 mettant en communication de fluide la sortie 93 du compresseur 92 et l'intérieur de l'enceinte 122. Une valve de pressurisation 138 est insérée dans la ligne de pressurisation 136.

### Circuit de dépressurisation de l'entonnoir

L'appareil comporte un circuit de dépressurisation de l'entonnoir.

Le circuit de dépressurisation de l'entonnoir comporte une ligne de dépressurisation 140 mettant en communication de fluide l'intérieur de l'enceinte 122 avec un puits de pression 142, par exemple la pression atmosphérique. Une valve de dépressurisation 144, commandée par le module de commande 20, est insérée dans la ligne de dépressurisation.

Dans un mode de réalisation préféré, le puits de pression 142 est le compresseur 92. Avantageusement, pendant toute la phase de remplissage du l'enceinte 122, l'air peut circuler, en circuit fermé, entre le compresseur, les conteneurs 42 et l'enceinte 122.

Dans un mode de réalisation préféré, le circuit de dépressurisation 144 de l'enceinte 122 permet également d'aspirer des dépôts éventuels, notamment entre les clapets de vidage amont 69 et aval 110, afin que ces dépôts tombent dans l'enceinte 122.

De préférence, la ligne de dépressurisation 140 débouche, en amont, dans l'enceinte 122 par une ouverture 146 située en un point haut de l'enceinte 122, de sorte que le mélange d'ingrédients contenu dans l'enceinte 122 ne puisse être aspiré par la ligne de dépressurisation, si la valve de dépressurisation est ouverte.

### Circuit de brassage

De préférence, l'appareil comporte encore un circuit de brassage, non représenté, permettant une injection d'air sous pression au sein du mélange d'ingrédients dans l'enceinte. Le circuit de brassage comporte de préférence une source de pression, par exemple le compresseur 92, et une ligne de brassage pourvue d'une valve de brassage, de préférence commandée par le module de commande 20, et mettant en communication l'enceinte et la source de pression.

Le circuit de brassage permet de préférence de mettre en émulsion le mélange présent dans l'enceinte, et, le cas échéant, d'augmenter la vitesse de son refroidissement. Dans un mode de réalisation, le circuit de brassage peut être confondu avec le circuit de pressurisation de l'enceinte 122.

### Module de refroidissement

L'appareil 10 comporte encore, de préférence, un module de refroidissement 150, de préférence disposé de manière à refroidir l'enceinte 122. Le module de refroidissement 150 est de préférence commandé par le module de commande 20 en fonction de mesures de température effectuées au moyen d'un capteur de température 152. Il s'étend de préférence sous l'enceinte 122, voire définit une partie de l'enceinte 122. De préférence, dans la position de service, le bol 121 est en contact avec le module de refroidissement 150. De préférence, le module de refroidissement 150 présente une surface de forme sensiblement complémentaire à la forme du bol 121, de manière que, dans la position de service, le contact entre le module de refroidissement 150 et le bol 121 soit étroit, et, de préférence, soit réalisé sur plus de 50%, plus de 80%, voire sensiblement 100% de la surface extérieure du bol 121.

Dans un premier mode de réalisation préféré, le module de refroidissement comporte un et de préférence plusieurs modules Peltier 151, de préférence muni d'un radiateur du côté opposé au bol 121. De préférence, la chaleur de ces radiateurs est évacuée vers l'extérieur par l'intermédiaire d'un réseau de conduites 155.

Dans ce premier mode de réalisation préféré, le module de refroidissement comporte de préférence un diffuseur de température 153, de préférence en aluminium, lui-même refroidi par un module Peltier.

Dans un deuxième mode de réalisation préféré, le module de refroidissement comporte une capsule 160 contenant un fluide 162 sous une pression de préférence supérieure à 5 bar, supérieure à 10 bar ou supérieure à 15 bar, de préférence d'environ 20 bar. Le fluide à l'intérieur de la capsule peut être sous forme gazeuse ou, de préférence, sous forme liquide. Le fluide est de préférence du dioxyde de carbone ou de l'azote.

L'appareil comporte une ligne de refroidissement 163 pourvue d'une valve de refroidissement 164 commandée par le module de commande 20, de manière à pouvoir sélectivement mettre en communication de fluide le fluide 162 et l'extérieur de la capsule, de préférence à la pression atmosphérique. L'ouverture de la valve de refroidissement 164 provoque ainsi la détente du fluide 162, et donc la production de frigories.

De préférence, la capsule 160 est amovible de manière à pouvoir être remplacée. La capsule peut être par exemple vissée, de préférence à proximité de l'enceinte 122, de préférence sur l'enceinte 122.

Le volume intérieur de la capsule est de préférence supérieur à 10 cm² et inférieur à 100 cm².

La valve de refroidissement 164 peut être fixée sur un goulot de la capsule, par exemple par clipsage, de préférence par vissage.

### Module de commande

Le module de commande 20 comporte classiquement un processeur et une mémoire comportant des instructions de code permettant de faire fonctionner le processeur, en particulier pour commander les organes électriques, et notamment les différentes valves et le compresseur.

De préférence, le module de commande comporte une interface permettant à l'utilisateur d'introduire des paramètres de commande, par exemple sous la forme d'un choix d'une recette de boisson. L'interface est de préférence un écran tactile.

Dans un mode de réalisation préféré, le module de commande comporte encore des moyens de communication permettant de recevoir des informations par internet, par exemple des mises à jour ou de nouvelles recettes.

De préférence, la mémoire du module de commande 20 comporte plus de deux, plus de cinq, plus de dix, voire plus de vingt recettes, chaque recette correspondant à une suite d'instructions envoyées par le module de commande, comme expliqué ci-après.

Dans un mode de réalisation préféré, l'appareil comporte encore une télécommande 154 permettant d'interagir à distance avec le module de commande 20, par exemple pour ordonner la fabrication d'une boisson particulière ou régler sa composition ou sa température.

La télécommande 154 est de préférence un appareil téléphonique muni d'un applicatif spécialisé. De préférence, l'applicatif spécialisé permet de visualiser la liste des recettes et d'ordonner la fabrication d'une boisson suivant cette recette.

Dans un mode de réalisation, l'applicatif transmet au module de commande 20 les instructions pour réaliser la boisson.

### Détecteur de présence

Dans un mode de réalisation particulièrement avantageux, notamment pour le premier mode de réalisation préféré du module de refroidissement, l'appareil 10 comporte encore un détecteur de présence 156 permettant au module de commande d'apprécier si un utilisateur potentiel est à proximité de l'appareil. Le détecteur 156 peut par exemple détecter un signal Wifi ou Bluetooth généré par un appareil portable d'un utilisateur potentiel de préférence pré-identifié, par exemple généré par son téléphone portable. Il peut également détecter l'établissement d'une communication entre la télécommande 154 et le module de commande 20, ou la simple mise en marche de la télécommande 154 ou de l'appareil.

De préférence, le module de commande 20 commande le module de refroidissement 150 sans attendre que la fabrication d'une boisson soit ordonnée. Avantageusement, si un utilisateur ordonne la fabrication d'une boisson ultérieurement, l'enceinte 122 a déjà été refroidie. La fabrication d'une boisson fraîche en est avantageusement accélérée.

Dans un mode de réalisation, après une durée prédéterminée, par exemple après trois minutes, le module de refroidissement est de nouveau éteint par le module de commande, ce qui permet une économie d'énergie.

De préférence, le détecteur de présence ne permet la détection d'un utilisateur potentiel que dans un rayon inférieur à 15 m, de préférence inférieur à 10 m, de préférence inférieur à 5 m. Avantageusement, le nombre d'activations inutiles du module de refroidissement, c'est-à-dire non suivie de la fabrication d'une boisson, en est réduit.

Dans le deuxième mode de réalisation préféré du module de refroidissement, l'appareil 10 ne comporte de préférence pas de détecteur de présence 156, une production importante de frigories par détente étant immédiate.

### Mélangeur, injecteur de gaz, ajout d'eau

Dans un mode de réalisation préféré, l'appareil comporte encore un mélangeur, non représenté, permettant de mélanger le contenu de l'enceinte 122. Le mélangeur peut être mécanique et être actionné par un moteur.

L'appareil peut encore comporter un injecteur de gaz, en particulier un injecteur de gaz carbonique, connu en soi, permettant de gazéifier le contenu de l'enceinte 122, afin d'obtenir une boisson gazeuse.

L'appareil peut également comporter un module de fabrication de glace, connu en soi, permettant d'introduire de la glace dans le verre 132.

Enfin, l'appareil peut comporter un module d'ajout d'eau permettant d'ajouter de l'eau dans l'enceinte et/ou, de préférence, dans le verre 132.

### Fonctionnement

Dans le mode de réalisation préféré, l'appareil 10 fonctionne de la manière suivante.

Différents récipients 42, contenant différents ingrédients 44, sont achetés. De préférence, les orifices de pressurisation 50 et de vidage 52 sont initialement fermés au moyen d'un opercule. Le récipient 42 est ainsi étanche et le récipient peut être facilement manipulé pour être vendu dans le commerce, par exemple dans la grande distribution. Les opercules sont retirés ou déchirés avant que le récipient soit assemblé à la tête 46. L'ouverture de ces orifices peut également résulter de l'assemblage du récipient 42 à la tête.

Lors de l'assemblage de la tête 46, les joints autour des clapets de pressurisation et de vidage amont de la tête viennent s'appuyer, de manière étanche, en regard des orifices de pressurisation 50 et de vidage 52, respectivement, du conteneur 16.

Des conteneurs prêts à l'emploi, déjà assemblés, peuvent être également commercialisés. De préférence, les conteneurs sont réutilisables, c'est-à-dire qu'ils peuvent être rechargés en ingrédient 44, par exemple par un remplissage à travers le clapet de pressurisation 67 et l'orifice de pressurisation 50.

Tous les conteneurs sont disposés dans des logements correspondants, dans la position de service.

Dans le premier mode de réalisation préféré du module de refroidissement, le bouchon 109 est dégagé du coupleur de vidage du logement dans lequel un conteneur doit être disposé. De préférence, la présence du bouchon empêche la mise en place du conteneur, ce qui évite toute erreur de manipulation.

La mise en position d'un conteneur dans un logement conduit l'aimant 112 du logement à attirer l'insert métallique 114 du conteneur 16. Les forces d'attraction qui en résultent conduisent à presser la tétine 89 de la tête 46 contre le joint d'étanchéité 108 disposé dans la buse de vidage 104 du logement. L'accouplement d'un conteneur dans un logement conduit ainsi à établir un circuit étanche depuis le conteneur 42, à travers le clapet de vidage amont 69, la tétine 89 et, le cas échéant, le clapet de vidage aval 110, jusqu'au bol 121 de l'entonnoir.

Les forces d'attraction conduisent également à presser le joint 100. Il en résulte un accouplement étanche de pressurisation, depuis le coupleur de pressurisation 30 du logement jusqu'à l'orifice de pressurisation 50 du récipient 42.

Dans la position de service, chaque marqueur 116 est lu par le lecteur 120, ce qui permet au module de commande 20 de savoir que le conteneur est présent sur le logement, mais aussi, par exemple, de connaître la nature de l'ingrédient, la quantité d'ingrédient résiduelle, ainsi que la date de mise en service.

La connaissance de la nature de l'ingrédient et de la quantité résiduelle d'ingrédient dans le récipient permet avantageusement au conteneur d'être placé dans n'importe quel logement. Avant de commencer la fabrication d'une boisson, il suffit en effet au lecteur de lire le marqueur pour connaître les ingrédients dont il dispose, ainsi que leurs emplacements et leurs quantités.

En particulier lorsque le conteneur est réutilisable, l'utilisateur peut reprogrammer le marqueur à chaque remplissage, de préférence au moyen du lecteur 120.

Lorsqu'un utilisateur potentiel est à proximité de l'appareil, sa présence peut être détectée par le détecteur 156, en particulier s'il active la télécommande 154 ou qu'un signal de type WIFI ou BLUETOOTH correspondant à un de ses appareils personnels, par exemple son téléphone portable, est détecté.

De préférence, dans le premier mode de réalisation préféré du module de refroidissement, le module de commande active alors le module de refroidissement 150, ce qui permet de refroidir immédiatement l'enceinte 122.

L'utilisateur peut par ailleurs ordonner la fabrication d'une boisson, par interaction avec un écran tactile ou des boutons de l'appareil ou par l'intermédiaire de la télécommande 154. Dans un mode de réalisation préféré, le module de commande détermine les boissons que l'appareil est capable de fabriquer, en fonction des quantités des ingrédients disponibles, et ne propose que ces boissons à l'utilisateur, de préférence par l'intermédiaire de son téléphone.

Le module de commande ordonne alors le versement dans l'enceinte 122 des ingrédients concernés. Plus précisément, pour transférer un ingrédient 44 depuis son conteneur 16 jusqu'à l'enceinte 122, le module de commande 20 ouvre la valve de pressurisation 94 correspondante. Le module de commande 20 ouvre également la valve de dépressurisation 144 de l'enceinte. Il démarre le compresseur 92, ce qui permet l'injection d'air sous pression, par l'intermédiaire du coupleur de pressurisation 30, du clapet de pressurisation 67 et de l'orifice de pressurisation 50, dans le récipient 42. La pression à l'intérieur du récipient 42 augmente en conséquence. Au-delà d'un seuil, sous l'effet de cette surpression, les clapets de vidage amont 69 et aval 110 s'ouvrent et l'ingrédient 44 peut s'écouler, par l'orifice de vidage 52, la tétine 89, les clapets de vidage 69 et 110, et le coupleur de vidage 36, dans l'enceinte 122.

De préférence, la valve de dépressurisation 144 est connectée à l'entrée du compresseur. Pendant la phase de pressurisation, le circuit d'air est donc avantageusement fermé. Les conditions d'hygiène sont donc optimales.

Les différents ingrédients peuvent être versés dans l'enceinte 122 simultanément ou non. De préférence, ils sont versés sensiblement simultanément, ce qui accélère la fabrication de la boisson.

La nature des ingrédients et leur dosage sont déterminés au moyen d'une recette mémorisée dans le module de commande 20.

Notamment pour fabriquer un cocktail, au moins deux ingrédients différents sont versés dans l'enceinte.

La quantité versée d'un ingrédient peut être notamment ajustée avec la durée de la mise sous pression du récipient correspondant et/ou avec la valeur de la pression imposée dans le récipient.

Après dosage d'une quantité déterminée d'ingrédients 44, en fonction de la recette, les valves de pressurisation 94 des conteneurs sont toutes fermées. La pression dans l'enceinte 122 baisse et les clapets de vidage amont et aval se ferment.

De préférence, l'enceinte 122 est ensuite nettoyée. A cet effet, de préférence, on active la source de dépression 146, et on maintient ouverte la valve de dépressurisation 144.

Lorsque le logement comporte un clapet de vidage aval 110, la baisse de pression à l'intérieur de l'enceinte 122 est de préférence adaptée de manière à ce que le clapet de vidage aval 110 s'ouvre, mais que le clapet de vidage amont 69 reste fermé. L'ingrédient contenu dans le volume intermédiaire 111 entre ces deux clapets peut donc s'écouler dans l'enceinte 122. De préférence, un cycle de nettoyage est effectué avant que le clapet de remplissage 126 ne s'ouvre. Avantageusement, les ingrédients extraits du volume intermédiaire 111 peuvent donc être évacués dans le verre 132.

Lorsque le logement ne comporte pas de clapet de vidage aval, mais un bouchon 109, le coupleur de vidage 36 du logement reste dégagé en permanence en présence d'un conteneur dans ledit logement. Avantageusement, l'ingrédient traversant le clapet de vidage amont peut ainsi s'écouler par gravité dans l'enceinte 122. Aucun cycle de nettoyage n'est donc nécessaire pour nettoyer l'espace en aval du clapet de vidage amont.

L'activation du module de refroidissement 150 refroidit les ingrédients présents dans l'enceinte 122. De préférence, le module de commande 20 évalue la température du mélange contenu dans l'enceinte 122 au moyen de la mesure prise par le capteur de température 152 et régule en conséquence le module de refroidissement 150.

Dans le premier mode de réalisation préféré du module de refroidissement, mettant en œuvre des modules Peltier, le module de refroidissement 150 est de préférence activé dès que le détecteur 156 détecte la présence d'un utilisateur potentiel. Les ingrédients sont donc versés dans un entonnoir dont la température est déjà réduite, ce qui permet d'accélérer considérablement le refroidissement. L'utilisation de modules Peltier et d'un diffuseur thermique en contact étroit avec le bol de l'entonnoir permet encore d'accélérer le refroidissement.

Dans le deuxième mode de réalisation préféré du module de refroidissement, le module de refroidissement 150 est de préférence activé après que les ingrédients ont été versés dans l'enceinte 122. A cet effet, le module de commande 20 commande une ouverture de la valve de refroidissement 164, ce qui permet au fluide 162 contenu dans la capsule 160 de s'en échapper. Cet échappement conduit à une chute brutale de la pression du fluide 162, et donc à la production de frigories. Ces frigories sont de préférence directement transmises au mélange d'ingrédients contenus dans le bol 121, c'est-à-dire que le fluide est de préférence injecté dans le mélange d'ingrédients contenus dans le bol.

Avantageusement, un refroidissement rapide et à un coût réduit est ainsi possible.

Des essais ont été effectués avec un mélange comportant un liquide alcoolisé (entre 0° à 70°) et une quantité de sucre comprise entre 0 et 250g. Ce mélange, disposé dans l'enceinte, en inox, était initialement à 27°C. Le fluide (CO₂ ou azote), initialement à l'état liquide dans la capsule, à environ 20 bar, a été éjecté de la capsule dans le mélange. Cette éjection a provoqué une détente du fluide, qui elle-même a refroidi le fluide, devenu gazeux, à environ -50°C. L'injection du fluide gazeux dans le mélange a réduit la température de ce dernier à environ 5°C en quelques secondes.

La valve de brassage peut être ouverte afin d'injecter dans l'enceinte 122 de l'air permettant de mélanger les différents ingrédients, voire de créer une émulsion, mais aussi faciliter le refroidissement. Alternativement, ou en complément, la pale d'un mélangeur mécanique peut être mise en rotation à l'intérieur de l'enceinte.

Dans un mode de réalisation, un injecteur de gaz carbonique est également mis en œuvre afin d'injecter dans le mélange contenu dans l'enceinte 122 une quantité déterminée de gaz carbonique afin d'obtenir une boisson gazeuse. Si nécessaire, de l'eau peut être également ajoutée à l'intérieur de l'enceinte 122.

Une fois que le mélange à l'intérieur de l'enceinte 122 correspond à la recette sélectionnée et est à la température adéquate, le module de commande 20 ordonne la fermeture de la valve de dépressurisation 144 et, le cas échéant, la fermeture de la valve de brassage et la fin de l'injection de gaz carbonique et/ou d'eau, afin que l'enceinte 122 soit hermétique.

Le module de commande 20 commande ensuite l'ouverture de la valve de pressurisation 138, ce qui permet l'injection d'air sous pression à l'intérieur de l'enceinte 122, et ainsi l'ouverture du clapet de remplissage 126. Sous l'effet de la pression de l'air ainsi injecté dans l'enceinte 122, le mélange contenu dans l'enceinte 122 s'écoule dans le verre 132.

La dose d'un ingrédient extrait d'un conteneur est enregistrée, par le lecteur 120, dans le marqueur 116 du conteneur. A la lecture des informations contenues dans le marqueur, le lecteur peut donc déterminer la quantité d'ingrédient résiduelle, et, le cas échéant, avertir l'utilisateur.

A tout instant, un conteneur peut être retiré de son logement. Dès qu'il est retiré, le clapet de pressurisation 67 se ferme. L'ingrédient 44 est donc isolé de l'extérieur, ce qui permet sa conservation.

Grâce au marqueur, le conteneur peut être replacé sur n'importe quel logement.

L'extraction d'un conteneur 16 conduit également à la fermeture du clapet de vidage aval 110 correspondant. Avantageusement, l'intérieur de l'enceinte 122 reste isolé de l'environnement extérieur, ce qui rend possible sa mise sous pression ou sous dépression, et améliore encore les conditions d'hygiène.

Comme cela apparaît clairement à présent, un appareil selon l'invention permet de fabriquer très rapidement et de manière précise une boisson fraiche, et en particulier un cocktail. En outre, les conteneurs peuvent être facilement remplacés, ce qui offre une grande souplesse d'utilisation. Enfin, un appareil selon l'invention permet un refroidissement extrêmement rapide de la boisson fabriquée.

Un appareil selon l'invention permet également une hygiène optimale, notamment parce que les circuits pour les ingrédients sont extrêmement courts, un ingrédient pouvant être transféré directement d'un conteneur vers l'enceinte 122, puis directement de l'enceinte 122 vers le verre 132, sans transiter par des tuyaux.

De préférence, un appareil selon l'invention ne comporte aucun conduit, et en particulier aucun tuyau, souple ou rigide, entre un conteneur quelconque et l'entonnoir.

Bien entendu, l'invention n'est pas limitée aux modes de réalisation décrits et représentés, fournis à des fins illustratives seulement.

En particulier, des clapets peuvent être remplacés par des valves commandées par le module de commande. Réciproquement, des valves peuvent être remplacées par des clapets.

Par exemple, le clapet de remplissage 126 pourrait être remplacé par une valve de remplissage 168 commandée par le module de commande. Avantageusement, un vidage de l'enceinte est ainsi possible sans que l'enceinte ait besoin d'être mise sous pression.

Dans un mode de réalisation préféré entre tous, comme représenté sur la figure 7, la valve de remplissage 168 comporte, classiquement, un actionneur 169 et un obturateur 170, l'actionneur entrainant l'obturateur entre des position fermée et ouverte, dans lesquelles il obture ou laisse dégagé, respectivement, un orifice de remplissage 172 ménagé dans le fond de l'enceinte 122.

De préférence, l'obturateur 170 est disposé de manière à être refroidi par le fluide sortant de la capsule 160. En particulier, l'obturateur peut présenter une lumière intérieure 174 dans laquelle ledit fluide 162 peut être injecté.

De préférence, la capsule et la ligne de refroidissement 163 sont fixes par rapport à l'enceinte 122. Un contact glissant 173 étanche est de préférence prévu entre la ligne de refroidissement 163 et la surface de l'obturateur définissant la lumière intérieure 174.

De préférence, l'obturateur est en un matériau métallique, favorable au transfert des frigories au mélange contenu dans l'enceinte. Dans un mode de réalisation, l'obturateur peut être pourvu d'ailettes afin de favoriser ce transfert.

De préférence encore, la lumière intérieure 174 débouche dans l'enceinte, de préférence de manière que le fluide traverse le mélange d'ingrédients contenu dans l'enceinte. De préférence, la lumière intérieure 174 débouche à l'extrémité inférieure de l'obturateur par un ou plusieurs orifices d'injection 176. Le ou les orifices d'injection 176 s'étendent de préférence à moins de 20 mm, de préférence à moins de 10 mm du fond de l'enceinte dans la position fermée de l'obturateur. La durée du contact entre le fluide et le mélange d'ingrédients contenu dans l'enceinte en est augmentée.

De préférence toujours, la direction d'injection est sensiblement radiale, par rapport à l'axe de l'orifice de remplissage 172. De préférence, la direction d'injection est sensiblement parallèle au fond de l'enceinte, comme représenté sur la figure 7. La durée du contact entre le fluide et le mélange d'ingrédients contenu dans l'enceinte en est encore augmentée. En outre, l'injection du fluide contribue au mélange des ingrédients.

Avantageusement, l'obturateur 170 exerce ainsi non seulement la fonction d'obturation sélective de l'orifice de remplissage 172, mais aussi une fonction de radiateur et/ou de conduite du fluide de refroidissement. La compacité et la simplicité de l'appareil en sont améliorées.

## Revendications

1. Appareil de fabrication d'une boisson à l'unité, comprenant :
- une source de pression (12) ;
- un cellier définissant une pluralité de logements (14) ;
- une pluralité de conteneurs (16) amovibles, immobilisés chacun, dans une position de service, dans un logement respectif, chaque conteneur comportant
- un récipient présentant une paroi d'une épaisseur supérieure à 1 mm et un volume intérieur supérieur à 0,1 litre, et contenant un ingrédient, et
- un clapet de vidage amont autorisant une sortie dudit ingrédient vers l'extérieur du récipient sous l'effet d'une surpression générée à l'intérieur dudit récipient par ladite source de pression ;
- une enceinte (122) de réception des ingrédients extraits desdits conteneurs, *via* lesdits clapets de vidage amont, sous l'effet de ladite surpression, de manière à fabriquer ladite boisson ;
- un module de commande (20) apte à commander desdites surpressions dans desdits conteurs en fonction d'une composition souhaitée pour ladite boisson,
appareil dans lequel chaque logement comporte un coupleur de vidage (36) par lequel l'ingrédient du conteneur immobilisé dans ledit logement peut être extrait dudit conteneur, ledit coupleur de vidage débouchant, vers l'aval, directement dans un entonnoir (18) défini par ladite enceinte.

2. Appareil selon la revendication immédiatement précédente, dans lequel l'enceinte comporte un orifice de remplissage (126) sélectivement obturable et débouchant au-dessus d'un emplacement de réception d'un verre.

3. Appareil selon la revendication immédiatement précédente, dans lequel le module de commande est configuré pour commander l'ouverture et la fermeture de l'orifice de remplissage.

4. Appareil selon l'une quelconque des revendications précédentes, dans lequel chaque conteneur comporte une tête fixée sur ledit récipient, ladite tête comportant un clapet de pressurisation autorisant une entrée de fluide en provenance de ladite source de pression, de préférence d'air, à l'intérieur de récipient.

5. Appareil selon la revendication immédiatement précédente, dans lequel la tête est amovible, et de préférence vissée sur ledit conteneur.

6. Appareil selon l'une quelconque des deux revendications immédiatement précédentes, dans lequel
- le clapet de pressurisation présente une pression d'ouverture comprise entre 100 mbar et 1 bar, et/ou
- le clapet de vidage amont présente une pression d'ouverture comprise entre 100 mbar et 1 bar.

7. Appareil selon l'une quelconque des revendications précédentes, dans lequel chaque logement comporte :
- un clapet de vidage aval (110) autorisant une sortie dudit ingrédient sous l'effet d'une surpression générée à l'intérieur dudit récipient par ladite source de pression, le clapet de vidage aval étant disposé en aval du clapet de vidage amont, en considérant le sens d'écoulement de l'ingrédient sortant du récipient, ou
- un bouchon (109) mobile entre une position dégagée et une position d'obturation dans laquelle il autorise ou interdit, respectivement, un écoulement par gravité de l'ingrédient depuis ledit récipient vers ladite enceinte.

8. Appareil selon la revendication immédiatement précédente, dans lequel :
- le clapet de vidage aval présente une pression d'ouverture inférieure à celle du clapet de vidage amont, ou
- le bouchon est conformé pour n'autoriser la mise en place d'un conteneur dans ledit logement que lorsqu'il est dans la position dégagée.

9. Appareil selon l'une quelconque des deux revendications immédiatement précédentes, dans lequel le volume intermédiaire entre les clapets de vidage amont et aval est inférieur à 5 cm³.

10. Appareil selon l'une quelconque des trois revendications immédiatement précédentes, comportant des moyens pour maintenir ledit bouchon dans la position d'obturation lorsque le logement n'est pas occupé par un conteneur.

11. Appareil selon la revendication immédiatement précédente, comportant des moyens magnétiques pour maintenir le bouchon dans la position d'obturation en l'absence de conteneur dans ledit logement.

12. Appareil selon l'une quelconque des revendications précédentes, comportant un circuit de dépressurisation de l'enceinte, ledit circuit de dépressurisation comportant une ligne de dépressurisation (140) mettant en communication de fluide l'enceinte avec un puits de pression (142), une valve de dépressurisation (144), commandée par le module de commande (20), étant insérée dans ladite ligne de dépressurisation.

13. Appareil selon la revendication immédiatement précédente, comportant un compresseur dont une entrée constitue un dit puits de pression et une sortie constitue une dite source de pression.

14. Appareil selon l'une quelconque des revendications précédentes, dans lequel chaque récipient comporte une paroi d'une épaisseur supérieure à 1 mm, de préférence supérieure à 1,5 mm, et/ou présente un volume intérieur inférieur à 1 L, de préférence inférieur à 0,5 L.

15. Appareil selon l'une quelconque des revendications précédentes, comportant, pour chaque logement, des moyens d'accouplement magnétiques entre ledit logement et un conteneur disposé dans ledit logement.

## Patentansprüche

1. Vorrichtung zur Herstellung einer Getränkeeinheit, umfassend:
- eine Druckquelle (12);
- einen Vorratsraum, der mehrere Aufnahmen (14) definiert;
- mehrere herausnehmbare Behälter (16), die in einer Betriebsposition jeweils in einer jeweiligen Aufnahme fixiert sind, wobei jeder Behälter aufweist:
- ein Gefäß, das eine Wand mit einer Dicke von mehr als 1 mm und einem Innenvolumen von mehr als 0,1 Liter aufweist und eine Zutat enthält, und
- ein stromaufwärtiges Ablassventil, das einen Austritt der Zutat aus dem Gefäß hinaus unter der Einwirkung eines von der Druckquelle im Inneren des Gefäßes erzeugten Überdrucks ermöglicht;
- eine Kammer (122) zur Aufnahme der Zutaten, die aus den Behältern über die Ablassventile unter der Einwirkung des Überdrucks entnommen wurden, um so das Getränk herzustellen;
- ein Steuermodul (20), das geeignet ist, die Überdrücke in den Behältern in Abhängigkeit von einer für das Getränk gewünschten Zusammensetzung zu steuern,
wobei in der Vorrichtung jede Aufnahme eine Ablasskupplung (36) aufweist, durch welche die Zutat des in der Aufnahme fixierten Behälters aus dem Behälter entnommen werden kann, wobei die Ablasskupplung stromabwärts direkt in einen durch die Kammer definierten Trichter (18) mündet.

2. Vorrichtung nach dem unmittelbar vorhergehenden Anspruch, wobei die Kammer eine Einfüllöffnung (126) aufweist, die selektiv verschließbar ist und oberhalb einer Aufnahmestelle für ein Glas mündet.

3. Vorrichtung nach dem unmittelbar vorhergehenden Anspruch, wobei das Steuermodul dafür ausgelegt ist, das Öffnen und das Schließen der Einfüllöffnung zu steuern.

4. Vorrichtung nach einem der vorhergehenden Ansprüche, wobei jeder Behälter ein auf dem Gefäß befestigtes Kopfstück aufweist, wobei das Kopfstück ein Druckregelventil aufweist, das ein Einströmen von von der Druckquelle kommendem Fluid, vorzugsweise von Luft, ins Innere des Gefäßes ermöglicht.

5. Vorrichtung nach dem unmittelbar vorhergehenden Anspruch, wobei das Kopfstück demontierbar und vorzugsweise auf den Behälter aufgeschraubt ist.

6. Vorrichtung nach einem der zwei unmittelbar vorhergehenden Ansprüche, wobei
- das Druckregelventil einen Öffnungsdruck zwischen 100 mbar und 1 bar aufweist, und/oder
- das stromaufwärtige Ablassventil einen Öffnungsdruck zwischen 100 mbar und 1 bar aufweist.

7. Vorrichtung nach einem der vorhergehenden Ansprüche, wobei jede Aufnahme aufweist:
- ein stromabwärtiges Ablassventil (110), das einen Austritt der Zutat unter der Einwirkung eines von der Druckquelle im Inneren des Gefäßes erzeugten Überdrucks ermöglicht, wobei das stromabwärtige Ablassventil stromabwärts des stromaufwärtigen Ablassventils angeordnet ist, bezogen auf die Fließrichtung der aus dem Gefäß ausströmenden Zutat, oder
- einen Stopfen (109), der zwischen einer Freigabeposition und einer Verschließposition, in welcher er einen Schwerkraftfluss der Zutat aus dem Gefäß in Richtung der Kammer ermöglicht bzw. verhindert, beweglich ist.

8. Vorrichtung nach dem unmittelbar vorhergehenden Anspruch, wobei
- das stromabwärtige Ablassventil einen Öffnungsdruck aufweist, der niedriger als derjenige des stromaufwärtigen Ablassventils ist, oder
- der Stopfen dafür ausgebildet ist, die Anbringung eines Behälters in der Aufnahme nur zu ermöglichen, wenn er sich in der Freigabeposition befindet.

9. Vorrichtung nach einem der zwei unmittelbar vorhergehenden Ansprüche, wobei das Zwischenvolumen zwischen dem stromaufwärtigen und dem stromabwärtigen Ablassventil kleiner als 5 cm³ ist.

10. Vorrichtung nach einem der drei unmittelbar vorhergehenden Ansprüche, welche Mittel aufweist, um den Stopfen in der Verschließposition zu halten, wenn die Aufnahme nicht von einem Behälter belegt ist.

11. Vorrichtung nach dem unmittelbar vorhergehenden Anspruch, welche magnetische Mittel aufweist, um den Stopfen bei Nichtvorhandensein eines Behälters in der Aufnahme in der Verschließposition zu halten.

12. Vorrichtung nach einem der vorhergehenden Ansprüche, welche einen Druckentlastungskreis der Kammer aufweist, wobei der Druckentlastungskreis eine Druckentlastungsleitung (140) aufweist, welche die Kammer mit einer Drucksenke (142) in Fluidverbindung bringt, wobei ein Druckentlastungsventil (144), das von dem Steuermodul (20) gesteuert wird, in die Druckentlastungsleitung eingesetzt ist.

13. Vorrichtung nach dem unmittelbar vorhergehenden Anspruch, welche einen Kompressor aufweist, von dem ein Eingang eine besagte Drucksenke darstellt und ein Ausgang eine besagte Druckquelle darstellt.

14. Vorrichtung nach einem der vorhergehenden Ansprüche, wobei jedes Gefäß eine Wand mit einer Dicke von mehr als 1 mm, vorzugsweise mehr als 1,5 mm, aufweist und/oder ein Innenvolumen aufweist, das kleiner als 11, vorzugsweise kleiner als 0,5 1 ist.

15. Vorrichtung nach einem der vorhergehenden Ansprüche, welche für jede Aufnahme magnetische Mittel zur Kupplung zwischen der Aufnahme und einem in der Aufnahme angeordneten Behälter aufweist.

## Claims

1. A machine for making an individual drink, comprising:
- a pressure source (12);
- a store defining a plurality of housings (14);
- a plurality of removable containers (16) each immobilized, in a service position, in a respective housing, each container including
- a receptacle containing an ingredient and having a wall more than 1 mm thick and an interior volume of more than 0.1 liter, and
- an upstream emptying valve allowing said ingredient to be caused to exit to the outside of the receptacle by an increased pressure generated inside said receptacle by said pressure source;
- a chamber (122) to receive the ingredients extracted from said containers, *via* the said upstream emptying one-way valves, because of said increased pressure, so as to make said drink;
- a control module (20) able to command said increased pressures in said containers as a function of a desired composition for said drink,
in which machine each housing includes an emptying coupler (36) via which the ingredient of the container immobilized in said housing can be extracted from said container, said emptying coupler opening, in the downstream direction, directly into a funnel (18) defined by said chamber.

2. The machine as claimed in the immediately preceding claim, in which the chamber includes a selectively closable filling orifice (126) opening above a location for receiving a glass.

3. The machine as claimed in the immediately preceding claim, in which the control module is configured to control the opening and the closing of the filling orifice.

4. The machine as claimed in any one of the preceding claims, in which each container includes a head fixed to said receptacle, said head including a pressurization one-way valve allowing entry into the receptacle of fluid, preferably air, coming from said pressure source.

5. The machine as claimed in the immediately preceding claim, in which the head is removable, and preferably screwed onto said container.

6. The machine as claimed in either one of the two immediately preceding claims, in which:
- the pressurization one-way valve has an opening pressure between 100 mbar and 1 bar inclusive, and/or
- the upstream emptying one-way valve has an opening pressure between 100 mbar and 1 bar inclusive.

7. The machine as claimed in any one of the preceding claims, in which each housing includes:
- a downstream emptying one-way valve (110) allowing exit of said ingredient because of an increased pressure generated inside said receptacle by said pressure source, the downstream emptying one-way valve being disposed downstream of the upstream emptying one-way valve, with reference to the direction of flow of the ingredient exiting the receptacle, or
- a stopper (109) mobile between a disengaged position and a closing position in which it respectively allows or prevents flow by gravity of the ingredient from said receptacle to said chamber.

8. The machine as claimed in the immediately preceding claim, in which:
- the downstream emptying one-way valve has an opening pressure lower than that of the upstream emptying one-way valve, or
- the stopper is shaped to allow the placing of a container in said housing only when it is in the disengaged position.

9. The machine as claimed in either one of the two immediately preceding claims, in which the intermediate volume between the upstream and downstream emptying one-way valves is less than 5 cm³.

10. The machine as claimed in any one of the three immediately preceding claims, including means for retaining said stopper in the closing position when the housing is not occupied by a container.

11. The machine as claimed in the immediately preceding claim, including magnetic means for retaining the stopper in the closing position in the absence of a container in said housing.

12. The machine as claimed in any one of the preceding claims, including a circuit for depressurizing the chamber, said depressurization circuit including a depressurization line (140) establishing fluid communication of the chamber with a pressure sink (142), a depressurization valve (144), controlled by the control module (20), being inserted into said depressurization line.

13. The machine as claimed in the immediately preceding claim, including a compressor an inlet of which constitutes a pressure sink and an outlet of which constitutes a pressure source.

14. The machine as claimed in any one of the preceding claims, in which each container includes a wall having a thickness more than 1 mm, preferably more than 1.5 mm, and/or has an interior volume less than 1 1, preferably less than 0.5 1.

15. The machine as claimed in any one of the preceding claims, including, for each housing, magnetic coupling means between said housing and a container disposed in said housing.
